# FASCICULE DE BREVET EUROPEEN

(11) **EP 2 597 227 B1**
(45) Date de publication et mention de la délivrance du brevet: **20.08.2014**
(21) Numéro de dépôt: 12191604.3
(22) Date de dépôt: 07.11.2012
(51) Int. Cl.: E04H 12/08, E04H 12/10, F03D 11/04, E02B 17/02, E02B 17/00, E04H 12/00

(54) **PIÈCE DE TRANSITION POUR UNE TOUR D'ÉOLIENNE**
ÜBERGANGSSTÜCK FÜR EIN TURM EINER WINDENERGIEANLAGE
TRANSITION PIECE FOR A TOWER OF A WIND ENERGY FACILITY

(30) Priorité: 25.11.2011 FR 1160809
(43) Date de publication de la demande: 29.05.2013
(73) Titulaire: STX FRANCE S.A., 44600 Saint Nazaire (FR)
(72) Inventeur: Salou, Arnaud, 44600 Saint Nazaire (FR); Deschamps, Sylvain, 44530 Dreffeac (FR); Thibaudeau, Antoine, 44250 Saint Brevin les Pins (FR); Locuratolo, Pascal, 44600 Saint Nazaire (FR)
(74) Mandataire: Regimbeau

(56) Documents cités:
- EP-A1- 2 072 685
- EP-A2- 1 729 007
- EP-B1- 1 774 122

## Description

La présente invention est relative à une pièce de transition pour une structure de fondation de construction à terre ("onshore") ou au large ("offshore") telle qu'une éolienne. Elle concerne également une structure de fondation qui en est équipée.

Une éolienne est principalement constituée d'une turbine (pales et nacelle) et d'un mât, ce dernier étant fixé à une structure portante fixe.

Dans le cas d'une éolienne implantée en mer, cette structure peut reposer ou être fixée au fond marin (par exemple pour des profondeurs inférieures à 100 m) ou flottante (par exemple pour des profondeurs supérieures à 100 m).

Une telle structure comporte généralement un assemblage mécanosoudé constitué de trois ou quatre jambes principales et de bracons de contreventement. Au sommet de cet assemblage est agencée une pièce de transition sur laquelle est fixé le mât. Une plateforme de travail et des éléments de structure secondaire (escalier, échelle, etc.) complètent généralement cette pièce de transition.

Dans le document EP 1 774 122 est décrite une éolienne dont la pièce de transition comporte un cylindre vertical auquel le mât sera fixé et contre lequel s'appuient quatre bracons destinés à transmettre les efforts résultant du poids du mât et des contraintes auxquelles ce dernier est soumis (flexion et torsion notamment). Chacun de ces bracons est relié, via une plateforme, à une jambe et à une paire de bracons secondaires, qui doivent être ajustés dans l'espace pour pouvoir être fixés, sans jeu notable, au sommet de la structure portante.

En plus de cet ajustement très contraignant, une telle structure présente les inconvénients suivants.

En premier lieu, elle comporte un nombre important de pièces, ce qui en augmente la complexité en termes de fabrication et d'assemblage de ces pièces entre elles. En effet, les grandes dimensions de ces pièces demandent des moyens importants pour être manutentionnées.

Il est donc nécessaire de limiter le nombre de pièces pour diminuer les opérations de manutention. Il est également difficile d'assembler avec précision des pièces de grandes dimensions et de masse importante, à moins de disposer d'un outillage couteux.

Les bracons en question peuvent également perturber les opérations à réaliser sur la plateforme qui équipe la pièce de transition et notamment la circulation des hommes et des matériels sur celle-ci.

Par ailleurs, il est également important de noter que les bracons tels que proposés ne permettent pas à eux seuls de résister aux efforts très importants de flexion et de torsion. En plus des bracons, il est alors nécessaire de dimensionner en conséquence une partie de la plateforme ainsi que les jambes principales et les bracons de contreventement ayant pour conséquence d'alourdir la masse de l'ensemble.

Par ailleurs, on connaît par le document EP 2 072 685 une pièce de transition constituée de quatre parties identiques assemblées les unes aux autres par des lignes de soudure verticales.

Compte tenu de la forme bombée de ces quatre parties, la pièce de transition telle que décrite dans ce document est de manière préférentielle obtenue par moulage, de même que les noeuds de transition.

Ce mode de fabrication fait appel à des moyens de fabrication spécifiques, d'autant plus que les dimensions des pièces sont importantes. Ces moyens étant généralement hors du lieu d'assemblage et compte tenu des dimensions de ces pièces, il faut les acheminer par voie routière ou fluviale. Cela en diminue la performance économique.

Le moulage est généralement économiquement intéressant à condition d'avoir des quantités importantes de pièces à réaliser. Il est, par ailleurs, difficile d'optimiser les masses et épaisseurs de pièces ainsi obtenues (refroidissement de matière, etc.). Or, ceci est important pour limiter le coût à l'achat et aussi à l'assemblage (épaisseur des pièces à souder notamment). Le temps de refroidissement de pièces ainsi obtenues peut également être une limite à une telle solution.

Un autre état de la technique est illustré par le document EP 1 729 007.

La présente invention a pour but essentiel de proposer une alternative aux structures décrites ci-dessus qui soit de conception simple, dont les éléments constitutifs sont aisés à fabriquer, qui présente une raideur, notamment à la torsion, qui soit significativement augmentée par rapport aux pièces connues de l'état de la technique et au sein de laquelle la diffusion des contraintes est améliorée.

Ainsi, la présente invention se rapporte en premier lieu à une pièce de transition pour une structure de fondation de construction à terre (onshore) ou au large (offshore), telle qu'une éolienne, qui est destinée à être fixée à l'extrémité supérieure d'une structure portante et à supporter un mât cylindrique, caractérisée par le fait qu'elle est constituée de quatre modules identiques en forme de quart de tronc de cône droit avec un premier bord de petit rayon de courbure, un deuxième bord de grand rayon de courbure et des troisième et quatrième bords rectilignes, quatre plaques planes triangulaires identiques étant respectivement intercalées et fixées à deux modules voisins par leurs troisième et quatrième bords rectilignes, de sorte qu'elle présente une ouverture supérieure circulaire présentant ledit grand rayon de courbure, tandis que son ouverture inférieure s'inscrit dans un carré, dont les "angles" présentent une courbure dudit petit diamètre.

Selon d'autres caractéristiques non limitatives et avantageuses de l'invention :
- lesdits quatre modules sont rendus jointifs deux à deux par les extrémités de leur deuxième bord de grand rayon de courbure ;
- elle comporte, le long de sa paroi interne et en regard de chacun des quatre modules identiques, une pièce en forme de portion de cylindre, cette pièce formant, avec le module disposé en regard, un manchon dont l'ouverture inférieure est à contour circulaire ;
- ladite pièce en forme de portion de cylindre est fixée à la dite paroi interne par au moins ses deux bords parallèles;
- elle comporte, dans l'une au moins des quatre plaques triangulaires, une découpe formant ouverture d'accès ;
- elle comporte, dans le prolongement de la base de chacune des plaques triangulaires, au moins une plaque formant jupe ;
- les modules et lesdites plaques triangulaires sont soudés les uns aux autres ;
- les modules et lesdites plaques triangulaires sont d'épaisseur sensiblement identiques ;
- elle comporte, autour de son ouverture supérieure, une bride de fixation permettant de réaliser, de manière préférentielle, une liaison réversible avec un mât, ladite bride de fixation étant avantageusement réalisée par l'intermédiaire d'un anneau circulaire soudé sur la pièce, ledit anneau étant pourvu de moyens de fixation, par exemple des goujons.

L'invention se rapporte également à une construction équipée d'une telle pièce de transition.

Selon des modes de réalisation avantageux :
- les emplacements respectifs des quatre jambes cylindriques de la construction et leur diamètre sont identiques ou sensiblement identiques à ceux desdits manchons de la pièce de transition ;
- chaque plaque formant jupe est fixée le long de ses deux bords opposés, notamment par soudage, auxdites jambes ;
- la base de ladite pièce de transition est solidaire d'une plateforme qui la ceinture au moins partiellement.

D'autres caractéristiques et avantages de l'invention apparaîtront à la lecture de la description détaillée qui va suivre. Elle sera faite en référence aux dessins annexés dans lesquels :
- la figure 1 est une vue en perspective d'une éolienne de structure connue reposant sur une structure de fondation équipée d'une pièce de transition selon l'invention ;
- la figure 2 est également une vue en perspective de ladite structure de fondation évoquée ci-dessus ;
- la figure 3 est une vue en perspective de la pièce de transition conforme à l'invention, en cours d'assemblage ;
- la figure 4 est une vue de cette pièce de transition une fois construite, avec sa bride de liaison au mât ;
- la figure 5 est équivalente à la vue précédente, mais montre en transparence des éléments rapportés formant avec la pièce des manchons ;
- la figure 6 est toujours une vue de ladite pièce de transition, en perspective montrant son ouverture inférieure ;
- la figure 7 est une vue de dessous de ladite pièce de transition ;
enfin, la figure 8 est une vue de la pièce de transition en place sur la structure de fondation et montrée équipée d'une plateforme.

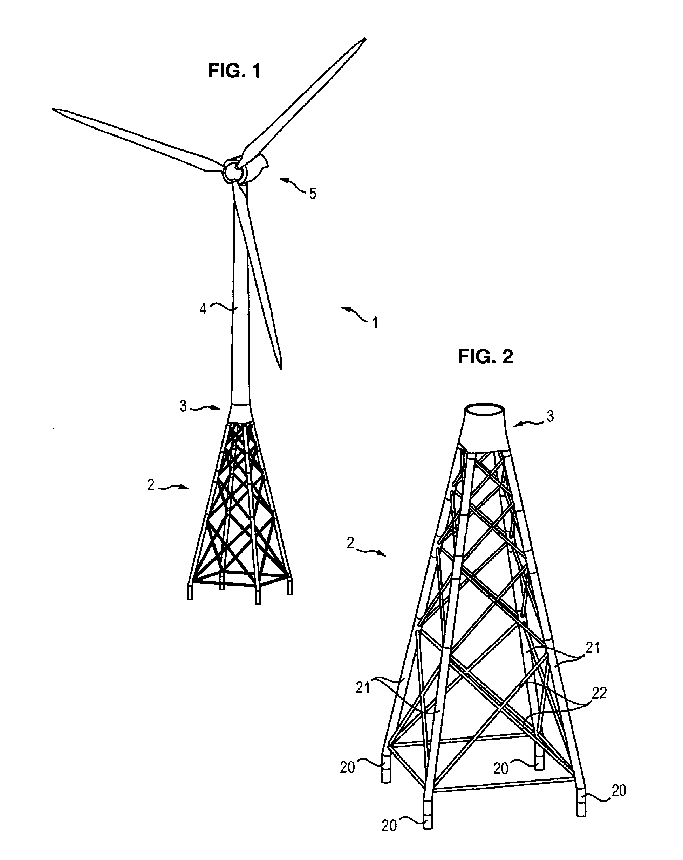

La construction 1 représentée en perspective et à titre purement exemplatif à la figure 1 consiste ici en une éolienne de type "offshore". Elle présente une structure de fondation constituée d'une structure portante 2 qui porte à son sommet une pièce de transition 3.

Cette structure de fondation est par exemple destinée à être implantée en mer à une profondeur par exemple inférieure à 100 m.

Au-dessus de la pièce de transition s'élève le mât 4 de l'éolienne qui porte en son sommet une turbine 5 formée d'hélices et d'une nacelle.

Une telle structure peut être fixée sur le fond maritime du fait du poids propre de l'ensemble.

On parle alors d'une embase gravitaire.

Dans les autres cas, des piles sont insérées dans le sol et sont reliées à ladite structure portante.

Le domaine de l'éolien offshore se différencie principalement de l'éolien terrestre par :
- l'utilisation de turbines très puissantes, souvent supérieures à 5 MW, engendrant des efforts très importants sur les structures ;
- des champs éoliens comprenant un nombre important d'éoliennes (souvent supérieures à 50) ;
- des moyens conséquents pour l'utilisation en mer des structures et des éoliennes ;
- des conditions environnementales très sévères (sols, houle, courants, vents, etc.) ;
- des exigences réglementaires plus sévères que dans le domaine terrestre, notamment en termes de tenue à la fatigue et de sécurité ;
- des conditions d'utilisation plus exigeantes (difficultés de maintenance, d'accès, de manutention des pièces et des outils).

C'est dans ce contexte que la présente invention est proposée.

En se reportant maintenant à la figure 2, on constate que la structure portante 2 est du type dénommé en anglais "jacket", et est constituée d'un ensemble de quatre pieds 20 qui se prolongent vers le haut chacun par une jambe 21 présentant une même orientation oblique formant un angle aigu par rapport à la verticale, de manière à former un ensemble ressemblant à la structure d'un derrick.

Au sommet des quatre jambes 21 est fixée la pièce de transition selon l'invention, référencée 3.

Afin de maintenir l'ensemble dans le plus parfait équilibre et de répartir les contraintes au niveau de la structure, les quatre jambes 21 sont reliées entre elles par un entrecroisement de bracons obliques référencés 22.

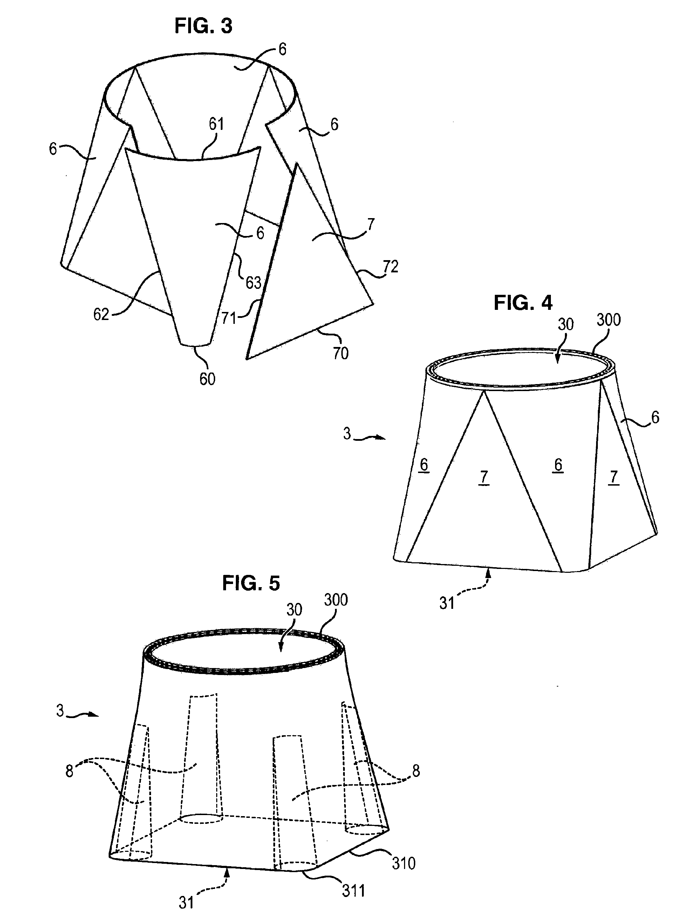

En se référant maintenant à la figure 3 et aux figures suivantes, nous allons décrire la structure particulière de la pièce de transition selon l'invention.

Il s'agit bien entendu d'une pièce métallique, comme l'est également l'ensemble de la construction.

Plus particulièrement en référence à la figure 3, on constate que cette pièce de transition 3 est formée de quatre modules identiques 6 et de quatre plaques triangulaires 7, également identiques.

Les quatre modules 6 ont la forme d'un quart de tronc de cône droit.

Ils sont donc délimités par un premier bord 60 arqué présentant un petit rayon de courbure, à l'opposé, par un second bord arqué de même orientation 61 présentant un grand rayon de courbure, et par un troisième ainsi qu'un quatrième bords rectilignes référencés 62 et 63.

Ainsi qu'on le verra plus loin, le rayon de courbure du bord 60 est identique à celui des jambes cylindriques 21 de la structure portante 2. Quant au bord 61 de grand rayon de courbure, ce dernier est identique au rayon de courbure du mât 4 cylindrique de l'éolienne.

De préférence, les quatre modules 6 sont réalisés par formage d'une feuille métallique, soit en utilisant un ensemble de rouleaux ou une presse.

Les quatre plaques triangulaires référencées 7 sont planes et ont la forme de triangles isocèles. Comme le montrent tout particulièrement les figures 3 et 4, ces quatre plaques 7 sont intercalées entre deux modules voisins et fixées à ces derniers par leurs bords 71 et 72.

Cette liaison se fait avantageusement par soudage de ces bords aux troisième et quatrième bords rectilignes des modules.

Dans le mode représenté ici, les quatre modules 6 sont rendus jointifs deux à deux par les extrémités opposées de leurs bords 61 de grand rayon de courbure. Ceci n'est toutefois pas strictement nécessaire.

En se reportant plus particulièrement à la figure 4 qui montre la pièce de transition 3 après assemblage avec sa bride de fixation 300, on constate que l'on obtient une forme complexe (ou composée) présentant une ouverture 30 supérieure de forme circulaire et de rayon de courbure défini par celui du bord 61 précité.

La bride 300 précitée est disposée autour de son ouverture supérieure 30, permet de réaliser, de manière préférentielle, une liaison réversible à un mât, cette bride étant avantageusement réalisée par l'intermédiaire d'un anneau soudé sur la pièce de transition, cet anneau étant pourvu de moyens pour recevoir des moyens de fixation tels que des goujons.

Elle présente aussi, bien entendu, une ouverture inférieure 31, plus particulièrement visible à la figure 5, qui s'inscrit dans un carré avec quatre côtés rectilignes 310 et des "angles de forme arrondie » (ou zones courbes), référencés 311, cette forme arrondie correspondant au rayon de courbure du petit bord 60 des modules 6.

Comme indiqué plus haut, cette pièce de transition est destinée à être fixée au sommet de la structure portante évoquée plus haut.

Pour ce faire et afin de transmettre correctement les efforts subis par cette pièce de transition vers la structure portante, il est nécessaire qu'il y ait une jonction précise entre cette pièce de transition 3 et la structure portante 2.

C'est pourquoi, ainsi qu'on le voit plus particulièrement à la figure 5 et aux deux figures suivantes, on met en place contre la paroi intérieure de la pièce de transition 3, en regard de ces zones courbes 311, des pièces identiques 8 en forme de portions de cylindre dont l'extrémité inférieure présente un rayon de courbure identique à celui du bord 60 de chaque module 6.

La fixation de ces pièces 8 à la pièce de transition 3 se fait de préférence par soudage le long des côtés rectilignes 81 de chacune des pièces 8.

En plus de servir de pièce de transition dans le cadre d'une structure d'éolienne telle que décrite ici, la pièce 3 peut servir de local qui va permettre d'accéder par exemple à l'intérieur du mât 4 et éventuellement contenir certains appareils de mesure ou autres équipement à caractère technique.

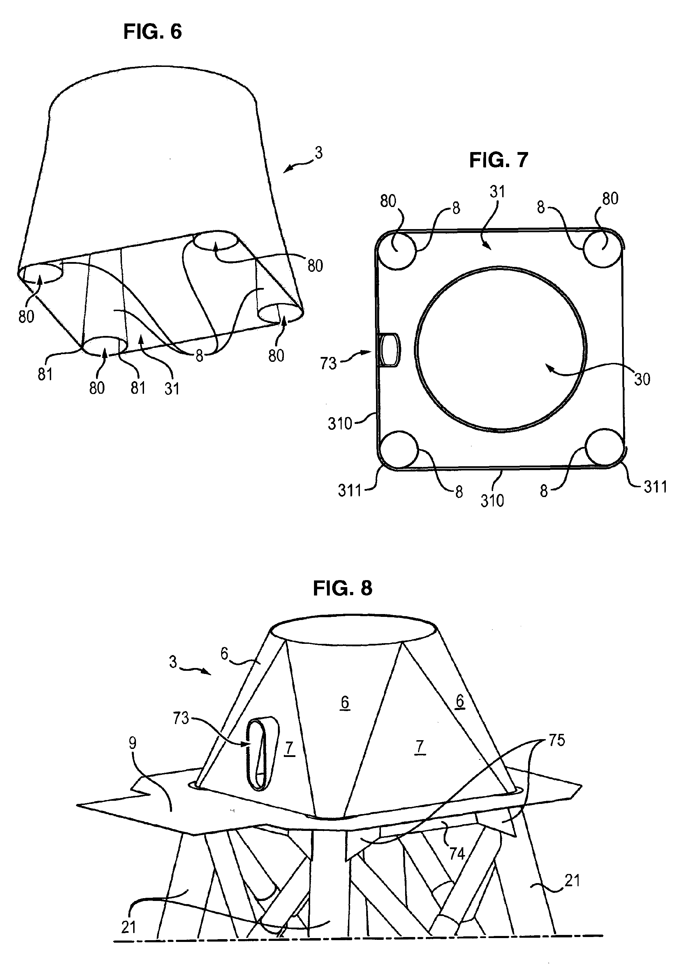

Selon la figure 8, pour cette raison, on aménage de préférence dans l'une des plaques 7 de la pièce 3 une ouverture 73 permettant un accès à l'intérieur. Lorsque cette pièce 3 est assemblée au sommet de la structure de fondation, on a de préférence aménagé, autour et à l'intérieur de la pièce de transition, une plateforme d'accès 9, comme montré à la figure 8. Dans ce mode de réalisation, la liaison des pièces 8 et des modules 6 aux jambes 21 peut se faire par l'intermédiaire de la plateforme 9.

Dans un mode de réalisation préférentiel illustré sur cette dernière figure, une « jupe » s'étend dans le prolongement des plaques 7, en dessous de la plateforme 9. Elle est ici constituée d'une plaque centrale 74 et de deux ailes 75 fixées respectivement à chaque jambe associée 21 de la structure, dont la fonction est d'encore d'améliorer la transmission des efforts de la pièce 3 vers la structure portante 2. Dans un autre mode de réalisation, la « jupe » est constituée d'une pièce d'un seul tenant.

Comme indiqué plus haut, les modules 6 utilisés dans l'invention sont aisément réalisables par formage au rouleau ou à la presse par exemple. Ces modules ont pour fonction de transmettre les efforts du mât 4 vers les jambes 21 de la structure portante 2. L'utilisation d'une forme généralement tronconique permet également de simplifier la liaison au niveau du décroisement, c'est-à-dire la pièce de raccordement entre les jambes de la structure portante et la pièce de transition.

L'usinage, le réglage et le soudage en sont donc particulièrement simplifiés.

Il est également possible de manière simple de garantir le bon alignement des éléments structurels en réalisant éventuellement cette pièce de transition à façon en fonction de relevés géométriques préalablement réalisés en atelier sur les jambes 21 de la structure de fondation et de la pièce de transition 3.

Par ailleurs, l'utilisation de parties planes (les plaques 7) dans la pièce de transition permet avantageusement de réaliser des ouvertures telles qu'une porte ou des aérations de la manière la plus simple possible.

Les parties planes évoquées ci-dessus permettent de plus d'augmenter significativement la raideur, notamment à la torsion, de la pièce de transition, et d'améliorer encore la diffusion des contraintes.

La pièce de transition ainsi réalisée présente une masse significativement inférieure aux pièces de transition de l'état de la technique sans conséquence sur la masse du « jacket ». De même, il est aussi possible de rester dans l'utilisation d'une épaisseur de plaque relativement faible, ce qui en réduit significativement le coût.

Il est aussi possible de réduire le nombre de pièces de renforcement constituant la structure portante, l'ensemble se traduisant par un gain de masse et de coût particulièrement significatif.

Enfin, en ce qui concerne la jupe formée des plaques 74 et 75, elle est utile pour diminuer les contraintes dans les parties hautes des jambes 21 au niveau de la jonction sous plateforme.

## Revendications

1. Pièce de transition (3) pour une structure de fondation de construction à terre ("onshore") ou au large ("offshore"), telle qu'une éolienne (1), qui est destinée à être fixée à l'extrémité supérieure d'une structure portante (2) et à supporter un mât cylindrique (4),
**caractérisée par le fait qu'**elle est constituée de quatre modules identiques (6) en forme de quart de tronc de cône droit avec un premier bord (60) de petit rayon de courbure, un deuxième bord de grand rayon de courbure (61) et des troisième et quatrième bords rectilignes (62, 63), quatre plaques planes triangulaires identiques (7) étant respectivement intercalées et fixées à deux modules voisins par leurs troisième (62) et quatrième (64) bords rectilignes,
de sorte qu'elle présente une ouverture supérieure circulaire (30) présentant ledit grand rayon de courbure, tandis que son ouverture inférieure (31) s'inscrit dans un carré, dont les "angles" présentent une courbure dudit petit rayon de courbure.

2. Pièce de transition selon la revendication 1, **caractérisée par le fait que** lesdits quatre modules (6) sont rendus jointifs deux à deux par les extrémités de leur deuxième bord (61) de grand rayon de courbure.

3. Pièce de transition selon la revendication 1 ou 2, **caractérisée par le fait qu'**elle comporte, le long de sa paroi interne et en regard de chacun des quatre modules identiques (6), une pièce en forme de portion de cylindre (8), cette pièce formant, avec le module disposé en regard, un manchon (80) dont l'ouverture inférieure est à contour circulaire.

4. Pièce de transition selon la revendication 3, **caractérisée par le fait que** ladite pièce en forme de portion de cylindre (8) est fixée à la dite paroi interne par au moins ses deux bords parallèles opposés (81).

5. Pièce de transition selon l'une des revendications précédentes, **caractérisée par le fait qu'**elle comporte, dans l'une au moins des quatre plaques triangulaires (7), une découpe formant ouverture d'accès (73).

6. Pièce de transition selon l'une des revendications précédentes, **caractérisée par le fait qu'**elle comporte, dans le prolongement de la base de chacune des plaques triangulaires (7), au moins une plaque formant jupe (74,75).

7. Pièce selon l'une des revendications précédentes, **caractérisée par le fait que** les modules (6) et lesdites plaques triangulaires (7) sont soudés les uns aux autres.

8. Pièce selon l'une des revendications précédentes, **caractérisée par le fait que** lesdits modules (6) et plaques triangulaires (7) sont d'épaisseur sensiblement identique.

9. Pièce selon l'une des revendications précédentes, **caractérisée par le fait qu'**elle comporte, autour de son ouverture supérieure (30), une bride (300) de fixation permettant de réaliser, de manière préférentielle, une liaison réversible à un mât, cette bride étant avantageusement réalisée par l'intermédiaire d'un anneau soudé sur la pièce de transition, cet anneau étant pourvu de moyens pour recevoir des moyens de fixation tels que des goujons.

10. Construction offshore, telle qu'une éolienne (1), qui comporte une structure de fondation (2) comprenant quatre jambes cylindriques (21), au sommet de laquelle est fixée une pièce de transition (3), laquelle supporte un mât (4), **caractérisée par le fait que** ladite pièce de transition (3) est conforme à l'une des revendications 1 à 9.

11. Construction selon la revendication 10, la pièce de transition étant selon la revendication 3, **caractérisée par le fait que** les emplacements respectifs des quatre jambes cylindriques (21) et leur diamètre sont identiques ou sensiblement identiques à ceux desdits manchons (80) de la pièce de transition (3).

12. Construction selon la revendication 10, la pièce de transition étant selon la revendication 6, **caractérisée par le fait que** chaque plaque formant jupe (74,75) est fixée le long de ses deux bords opposés, notamment par soudage, auxdites jambes.

13. Construction selon l'une des revendications 10 à 13, **caractérisé par le fait que** la base de ladite pièce de transition (3) est solidaire d'une plateforme qui la ceinture au moins partiellement.

## Patentansprüche

1. Übergangsstück (3) für eine Gründungsstruktur eines Bauwerks an Land ("Onshore") oder vor der Küste ("Offshore"), wie eine Windkraftanlage (1), wobei das Übergangsstück dazu bestimmt ist, an dem oberen Ende einer tragenden Struktur (2) befestigt zu werden und einen zylindrischen Mast (4) zu tragen,
**dadurch gekennzeichnet, dass** es aus vier identischen Modulen (6) in Form eines geraden Kegelstumpf-Viertels mit einem ersten Rand (60) mit kleinem Krümmungsradius, einem zweiten Rand mit großem Krümmungsradius (61) und einem geraden dritten und vierten Rand (62, 63) besteht, wobei vier identische dreieckige ebene Platten (7) jeweils eingesetzt und über deren geraden dritten (62) und vierten (64) Rand an zwei benachbarten Modulen befestigt sind,
derart, dass es eine kreisförmige obere Öffnung (30) aufweist, die den großen Krümmungsradius (61) aufweist, während seine untere Öffnung (31) sich in ein Quadrat einfügt, dessen "Winkel" eine Krümmung des kleinen Krümmungsradius aufweisen.

2. Übergangsstück nach Anspruch 1, **dadurch gekennzeichnet, dass** die vier Module (6) über die Enden ihres zweiten Rands (61) mit großem Krümmungsradius paarweise aneinander stoßen.

3. Übergangsstück nach Anspruch 1 oder 2, **dadurch gekennzeichnet, dass** es entlang seiner Innenwand und gegenüber jedem der vier identischen Module (6) ein zylinderabschnittsförmiges Teil (8) aufweist, wobei dieses Teil mit dem gegenüber angeordneten Modul eine Hülse (80) bildet, deren untere Öffnung eine kreisförmige Kontur hat.

4. Übergangsstück nach Anspruch 3, **dadurch gekennzeichnet, dass** das zylinderabschnittsförmige Teil (8) an der Innenwand über mindestens seine zwei entgegengesetzten parallelen Ränder (81) befestigt ist.

5. Übergangsstück nach einem der vorhergehenden Ansprüche, **dadurch gekennzeichnet, dass** es in mindestens einer der vier dreieckigen Platten (7) einen Ausschnitt aufweist, der eine Zugangsöffnung (73) bildet.

6. Übergangsstück nach einem der vorhergehenden Ansprüche, **dadurch gekennzeichnet, dass** es in der Verlängerung der Basis jeder der dreieckigen Platten (7) mindestens eine Platte aufweist, die eine Schürze (74, 75) bildet.

7. Stück nach einem der vorhergehenden Ansprüche, **dadurch gekennzeichnet, dass** die Module (6) und die dreieckigen Platten (7) miteinander verschweißt sind.

8. Stück nach einem der vorhergehenden Ansprüche, **dadurch gekennzeichnet, dass** die Module (6) und dreieckigen Platten (7) eine im Wesentlichen identische Dicke haben.

9. Stück nach einem der vorhergehenden Ansprüche, **dadurch gekennzeichnet, dass** es um seine obere Öffnung (30) herum einen Befestigungsflansch (300) aufweist, der es vorzugsweise ermöglicht, eine reversible Verbindung mit einem Mast zu realisieren, wobei dieser Flansch vorteilhafterweise mittels eines Rings realisiert ist, der an dem Übergangsstück angeschweißt ist, wobei dieser Ring mit Mitteln zur Aufnahme von Befestigungsmitteln wie Stiften versehen ist.

10. Offshore-Bauwerk, wie eine Windkraftanlage (1), die eine Gründungsstruktur (2) aufweist, die vier zylindrische Beine (21) umfasst, an deren Spitze ein Übergangsstück (3) befestigt ist, das einen Mast (4) trägt, **dadurch gekennzeichnet, dass** das Übergangsstück (3) nach einem der vorhergehenden Ansprüche 1 bis 9 ausgebildet ist.

11. Bauwerk nach Anspruch 10, wobei das Übergangsstück wie in Anspruch 3 ausgebildet ist, **dadurch gekennzeichnet, dass** die jeweiligen Einbauorte der vier zylindrischen Beine (21) und deren Durchmesser identisch oder im Wesentlichen identisch mit denen der Hülsen (80) des Übergangsstücks (3) sind.

12. Bauwerk nach Anspruch 10, wobei das Übergangsstück nach Anspruch 6 ausgebildet ist, **dadurch gekennzeichnet, dass** jede Platte, die eine Schürze (74, 75) bildet, entlang ihrer zwei entgegengesetzten Ränder, insbesondere durch Verschweißung, an den Beinen befestigt ist.

13. Bauwerk nach einem der Ansprüche 10 bis 13, **dadurch gekennzeichnet, dass** die Basis des Übergangsstücks (3) fest verbunden ist mit einer Plattform, die sie mindestens teilweise umgibt.

## Claims

1. A transition piece (3) for a foundation structure of an onshore or offshore construction, such as a wind turbine (1), designed to be fixed to the upper end of a support structure (2) and to support a cylindrical mast (4),
**characterized in that** it comprises four identical modules (6) in the form of a quarter of a trunk of a straight cone with a first edge (60) of small radius of curvature, a second edge of large radius of curvature (61) and third and fourth rectilinear edges (62, 63), four identical triangular flat plates (7) being respectively interposed and fixed to two adjacent modules by their third (62) and fourth (64) rectilinear edges,
such that it has a circular upper opening (30) presenting said large radius of curvature, whereas its lower opening (31) forms a square, whereof the "angles" exhibit a curve of said small radius of curvature.

2. The transition piece according to claim 1, **characterized in that** said four modules (6) are joined in pairs by the ends of their second edge (61) of large radius of curvature.

3. The transition piece according to claim 1 or 2, **characterized in that** it comprises, along its internal wall and opposite each of the four identical modules (6), a piece in the form of a portion of a cylinder (8), this piece forming, with the module arranged opposite, a sleeve (80) whereof the lower opening has a circular contour.

4. The transition piece according to Claim 3, **characterized in that** said piece in the form of a portion of a cylinder (8) is fixed to said internal wall by at least its two opposite parallel edges (81).

5. The transition piece according to one of the preceding claims **characterized in that** it comprises, in at least one of the four triangular plates (7), a cutout forming an access opening (73).

6. The transition piece according to one of the preceding claims, **characterized in that** it comprises, in the extension of the base of each of the triangular plates (7), at least one plate forming a skirt (74, 75) .

7. The piece as according to one of the preceding claims **characterized in that** the modules (6) and said triangular plates (7) are welded to each other.

8. The piece according to one of the preceding claims, **characterized in that** said modules (6) and triangular plates (7) are of substantially identical thickness.

9. The piece according to one of the preceding claims, **characterized in that** it comprises, about its upper opening (30), a fastening flange (300) preferably for making a reversible link to a mast, this bride being advantageously made by means of a ring welded onto the transition piece, this ring being provided with means for receiving fixing means such as studs.

10. An offshore construction, such as a wind turbine (1), which comprises a foundation structure (2) comprising four cylindrical legs (21), at the apex of which is fixed a transition piece (3) which supports a mast (4), **characterized in that** said transition piece (3) is according to one of claims 1 to 9.

11. The construction according to claim 10, the transition piece being according to claim 3, **characterized in that** the respective placements of the four cylindrical legs (21) and their diameter are identical or substantially identical to those of said sleeves (80) of the transition piece (3).

12. The construction according to claim 10, the transition piece being according to claim 6, **characterized in that** each plate forming a skirt (74, 75) is fixed along its two opposite edges, especially by welding, to said legs.

13. The construction according to one of claims 10 to 13, **characterized in that** the base of said transition piece (3) is attached to a platform which encircles it at least partially.
